# EUROPÄISCHE PATENTANMELDUNG

(11) **EP 1 738 639 A1**
(43) Veröffentlichungstag der Anmeldung: **03.01.2007**
(21) Anmeldenummer: 05014366.8
(22) Anmeldetag: 01.07.2005
(51) Int. Cl.: A01K 1/015

(54) **Einstreu für Geflügel**

(71) Anmelder: Gottschalk, Marco, 31712 Niedernwöhren (DE)
(72) Erfinder: Gottschalk, Marco, 31712 Niedernwöhren (DE)
(74) Vertreter: Körner, Peter

(57) **Zusammenfassung**

Die Erfindung betrifft eine Einstreu für Geflügel, die durch ein Verfahren erhalten wird, bei dem Pellets und/oder Briketts aus zunächst zerkleinertem, dann verdichtetem Stroh trocken granuliert werden, wobei das Granulat verdichtete Anteile aufweist.

## Beschreibung

Die vorliegende Erfindung liegt auf dem Gebiet der Geflügelzucht bzw. der Geflügelmast.

Geflügel ist ein Sammelbegriff für Vögel, die als Nutztiere gezüchtet werden. Der Begriff Geflügel umfasst beispielsweise Hähnchen, Hühner, Truthähne, Enten und Puten.

Die Geflügelzucht erfolgt vor allem zur Gewinnung von Fleisch und Eiern.

Bei der Zucht aller Geflügelarten, die zur menschlichen Ernährung gezüchtet werden, verfolgt man vor allem das Ziel, die Fleischleistung der Tiere zu verbessern. Die Tiere werden üblicherweise noch vor ihrer Geschlechtsreife geschlachtet und im Handel meist als Jungmastgeflügel angeboten.

Die starke Nachfrage und die Forderung nach spezialisierter Zucht, Schlachtung und Auslieferung haben zu automatisierten Massenproduktionsmethoden bzw. zur Intensivmast in Form von Mastbatterien oder Bodenhaltung geführt.

In der Wirtschaftsgeflügelzucht - bzw. Geflügelmast wird zwischen Zuchtbetrieb, Vermehrungsbetrieb und Lege- oder Mastbetrieb unterschieden. Der Zuchtbetrieb besitzt die Ausgangslinien für die Züchtung und verkauft Elterntierküken an den Vermehrungsbetrieb. Im Vermehrungsbetrieb wachsen die Elterntierküken auf. Mit fünf Monaten beginnen die Hennen mit der Eiablage. Aus diesen Bruteiern schlüpfen die Küken, die später als Legehennen oder Masthähnchen verwendet werden. Der Lege- oder Mastbetrieb kauft Legehennen- oder Masthähnchenküken vom Vermehrungsbetrieb zu und nutzt diese als Eier- oder Fleischlieferanten.

In der intensiven Geflügelzucht bzw. Geflügelmast gelten in Deutschland bestimmte Haltungsvorschriften, die in naher Zukunft jedoch durch eine europäische Haltungsrichtlinie zum Schutz von Masthühnern abgelöst werden sollen, da die Hühner in der derzeitigen intensiven Tierhaltung unzureichend geschützt sind.

Die Methoden der intensiven Tierhaltung haben nämlich zu erheblichen Tierschutzproblemen geführt und die Verbraucher haben wiederholt ihre Besorgnis darüber zum Ausdruck gebracht.

Es ist bekannt, dass Geflügel in der intensiven Tierhaltung häufig keinerlei Gelegenheit bekommt, seine natürlichen Verhaltensweisen, beispielsweise Gehen, Laufen, Scharren und die artgemäße Nahrungssuche, auszuleben.

Daraus resultieren Verhaltensstörungen, die mit erheblichen Leiden der Masthähnchen verbunden sind. Insbesondere stehen die Masthähnchen häufig unter Stress, der die erforderlichen Ruhephasen und den notwendigen Schlaf der Masthähnchen unterdrückt. Als äußeres Anzeichen für das Leiden der Masthähnchen und das Unterdrücken ihrer natürlichen Verhaltensweisen sind Bewegungsstereotypien anzusehen. Bekannt ist beispielsweise das Federpicken gegenüber Artgenossen, welches zu lebensbedrohlichen Verletzungen der Tiere führen kann.

Der Lebensraum der Tiere steigert darüber hinaus das Risiko zu erkranken. Eine der wohl häufigsten Krankheiten bei Masthähnchen sind Fußverätzungen, bei den es sich um Veränderungen der Fußballen in Form regelrechter Löcher handelt, die dadurch hervorgerufen werden, dass die Tiere in großer Anzahl auf kleinem Raum im Kot bzw. Urin stehen müssen.

Es hat sich herausgestellt, dass die Masthähnchen bereits als Küken an diesen Fußverätzungen erkranken. Dies ist darauf zurückzuführen, dass die Küken schon im Alter von einem Tag in die Stallungen gelangen. Da die vor Verätzungen schützende Hornhautbildung an den Füßen der Küken etwa 7 bis 10 Tage braucht, sind die Küken zum Zeitpunkt ihrer Einstallung besonders gefährdet.

Durch die unhygienischen Bedingungen können neben den genannten Fußverätzungen auch andere Krankheiten entstehen, die dann mit Medikamenten behandelt werden müssen. Darüber hinaus werden den Tieren zur Vorbeugung gegen Krankheiten und zur Beruhigung Medikamente, meist Antibiotika, in ihr Futter gemischt. Diese Medikamente können dann als Rückstände im Schlachtkörper der Masthähnchen vorkommen und den Endverbraucher gefährden.

Das mit der genannten geplanten Haltungsrichtlinie verfolgte Konzept soll nun konkrete Verbesserungen für die Tiere gewährleisten und dabei gleichzeitig den Haltern eine gewisse Flexibilität in den Tierhaltungsmethoden ermöglichen, wenn sie die aufgestellten Tierschutznormen weiterhin einhalten.

Die Richtlinie schreibt eine maximale Besatzdichte von 30 kg Lebendgewicht je Quadratmeter sowie Mindestvorschriften zum Schutz der Tiere vor. Die Halter müssen dafür sorgen, dass die Tiere Zugang zu Einstreu, Tränkanlagen und Futter haben und eine ausreichende Belüftung vorhanden ist. Die Stallungen müssen ein Minimum an Licht bieten und sind mindestens zweimal täglich zu inspizieren.

Hähnchen mit gravierenden Verletzungen oder in schlechtem Gesundheitszustand sollen gemäß Haltungsrichtlinie angemessen behandelt oder unverzüglich getötet werden. Dies setzt natürlich voraus, dass diejenigen Hähnchen auch als solche erkannt werden, was aber häufig nicht möglich ist.

Obwohl die geplante Haltungsrichtlinie eine maximale Besatzdichte von 30 kg/m² vorschreibt und Tierschutzprobleme eher bei einer Besatzdichte von über 30 kg/m² auftreten, ist eine Verbesserung der Tierschutzverhältnisse durchaus gefragt. Denn die geplante Haltungsrichtlinie erlaubt Betrieben, die die Tierschutzverhältnisse verbessert haben, eine Besatzdichte von bis zu 38 kg/m² zu haben, solange eine Überwachung im Schlachthof weiterhin ergibt, dass die Tiere unter keinen besonderen Tierschutzproblemen leiden.

Es ist daher sinnvoll, die Masthähnchen durch Ausschalten schädlicher Faktoren bereits so zu halten, dass solche Verletzungen, insbesondere die bereits beschriebenen Fußverätzungen, und damit einhergehenden Erkrankungen gar nicht erst eintreten.

Der Erfindung liegt daher die Aufgabe zugrunde, die Tierschutzverhältnisse in der Geflügelzucht bzw. Geflügelmast zu verbessern, um eine Besatzdichte des Geflügels von bis zu 38 kg/m² zu ermöglichen.

Hierbei geht die Erfindung von der Erkenntnis aus, dass die in den Stallungen verwendete Einstreu ein wesentlicher Faktor für das Wohlbefinden der Masthähnchen, insbesondere der Küken ist.

Einstreu bezeichnet Material, das in Stallungen den Boden bedeckt, um die Ausscheidungen der dort lebenden Tiere aufzunehmen. Bekannte Materialien für Einstreu von Stallungen sind Sand, Holzspäne, Stroh und Hanf. Ist die Einstreu mit tierischen Ausscheidungen gesättigt, spricht man von Mist.

Es hat sich herausgestellt, dass die bisher bekannte Einstreu nicht geeignet ist, die natürlichen Verhaltensweisen von Masthähnchen, insbesondere von Küken, zu unterstützen. Ein Scharren und eine artgerechte Nahrungssuche in der bekannten Einstreu sowie das Gehen und Laufen auf dieser sind problematisch. Dies führt zu den bereits beschriebenen Verhaltensanomalien.

Darüber hinaus hat sich herausgestellt, dass die Einstreu bereits vor dem Einbringen in die Stallungen mikrobiell mit potentiellen Krankheitserregern belastet sein kann, die dann zu Erkrankungen der Masthähnchen und insbesondere der Küken führen können.

Weiterhin wurde festgestellt, dass die bisher verwendete Einstreu unzureichend geeignet ist, den von den Masthähnchen und Küken abgegebenen Kot und Urin aufzunehmen, so dass die Masthähnchen und Küken dann in den eigenen ätzenden Ausscheidungen stehen, die zu den bereits beschriebenen Fußverätzungen führen.

Es hat sich auch gezeigt, dass die bisher verwendete Einstreu bei Kontakt mit Kot und Urin schnell zu einem Konglomerat wird, in dem ein Scharren und eine artgerechte Nahrungssuche nicht mehr möglich ist.

Die der Erfindung zugrunde liegende Aufgabe, die Tierschutzverhältnisse in der Geflügelzucht bzw. Geflügelmast zu verbessern, wird durch eine Einstreu, die durch ein Verfahren gemäß den Merkmalen des Anspruchs 1 erhältlich ist, gelöst. Weiterbildungen und vorteilhafte Ausgestaltungen der Erfindung ergeben sich aus den Unteransprüchen.

Pellets und/oder Briketts aus zunächst zerkleinertem, dann verdichtetem Stroh sind für sich bekannt.

Aus der DE 198 24 132 C2 ist beispielsweise eine Einstreu für die Tierhaltung, insbesondere für die Pferdehaltung, bekannt, welche aus organischem, faserigem Material wie Stroh hergestellt wird, wobei die Einstreu in Form von Pellets vorliegt, die einen Durchmesser von > 20 mm haben. Die Pellets können anschließend mittels einer Zerkleinerungsmaschine zu Flocken zerkleinert werden, um Einstreu für Kleintiere zu bilden. Unter einer Flocke wird allgemein eine sehr lockere kleine Masse oder eine in Blättchenform gepresste Masse verstanden.

Aus der DE 199 28 125 A1 ist ebenfalls ein Einstreumaterial für Tiere bekannt, das überwiegend aus zu Pellets und/oder Briketts verdichteten Strohfasern bzw. Strohfasergebilden besteht. Der Begriff "Strohfasergebilde" umfasst dabei auch mehrere nebeneinander liegende einzelne Strohfasern, die während eines Zerfaserungsvorganges in Faserlängsrichtung nicht oder zumindest nicht vollständig voneinander gelöst worden sind. Die Größe der einzelnen aus Strohfasermaterial gepressten Pellets und/oder Briketts hängt im Wesentlichen von dem beabsichtigten Einsatzzweck, entweder für Groß- oder Kleintiere, ab. So können die einzelnen Pellets oder Briketts eine Länge von bis zu 20-40 mm und einen Durchmesser von bis zu 10-15 mm haben, wobei auch eine weitere Zerkleinerung zu Bruchstücken denkbar ist.

Erfindungsgemäß werden die Pellets und/oder Briketts aus zunächst zerkleinertem, dann verdichtetem Stroh, trocken granuliert, wobei das Granulat verdichtete Anteile aufweist.

Mit einer derartigen Einstreu werden die Tierschutzverhältnisse in den Stallungen wesentlich verbessert.

Die erfindungsgemäße Einstreu zeichnet sich dadurch aus, dass diese durch das Granulieren der Pellets und/oder Briketts sowohl mit kleinen Körnchen, nämlich verdichteten Anteilen, versehen ist als auch Bestandteile umfasst, die besonderes weich sind und sich deshalb schonend auf die Füße bzw. die Haut des Geflügels auswirken. Makroskopisch betrachtet umfasst die erfindungsgemäße Einstreu dreidimensionale und zweidimensionale Anteile.

Es hat sich gezeigt, dass eine derartige erfindungsgemäße Beschaffenheit der Einstreu das Geflügel, insbesondere die Masthähnchen bzw. Küken, dazu einlädt, ihre natürlichen Verhaltensweisen, beispielsweise Gehen, Laufen, Scharren und die artgemäße Nahrungssuche, auszuleben. Die Einstreu ist hierfür weder zu weich noch sind die einzelnen Körner zu groß.

Verhaltensstörungen, die mit erheblichen Leiden der Masthähnchen verbunden sind, können so verhindert werden. Das Geflügel kann stressfrei aufwachsen und Bewegungsstereotypien, beispielsweise das Federpicken gegenüber Artgenossen, welches zu lebensbedrohlichen Verletzungen der Tiere führen kann, können so abgewendet werden.

Darüber hinaus zeichnet sich die erfindungsgemäße Einstreu durch ein hohes Saugvermögen aus, wobei die Einstreu aufgrund ihrer Granulierung trotzdem ständig locker, weich und trocken bleibt. Dies ist auch darauf zurückzuführen, dass das Geflügel, insbesondere die Masthähnchen und Küken, nunmehr ihre natürlichen Verhaltensweisen aufgrund der erfindungsgemäßen Beschaffenheit der Einstreu ausleben, wodurch die Einstreu immer wieder gewendet wird. So bleibt die Einstreu den gesamten Mastdurchlauf locker, weich und trocken.

Dadurch, dass die Einstreu den gesamten Mastdurchlauf trocken, weich und locker bleibt, wird auch verhindert, dass das Geflügel, insbesondere die Küken, die bekannten Fußverätzungen bekommen, die dadurch hervorgerufen werden, dass die Tiere im eigenen Kot oder Urin stehen müssen.

Insgesamt wird durch die erfindungsgemäße Einstreu der Gesundheitszustand und damit der Schutz des Geflügels erheblich verbessert.

Vorteilhaft wird dadurch auch der Medikamentenverbrauch reduziert. Weniger Medikamente bedeuten weniger Rückstände im Schlachtkörper des Geflügels.

Gesunde Tiere bedeuten für den Geflügelhalter bessere Masterfolge, da er dann die Besatzdichte in seinen Stallungen entsprechend der geplanten Haltungsrichtlinie der Europäischen Kommission von 30 auf 38 kg Lebendgewicht pro m² steigern darf. Der Geflügelhalter erhält somit die Möglichkeit, wirtschaftlich zu arbeiten, um sein Geflügel qualitativ hochwertig in bester Güteklasse und trotzdem preiswert anbieten zu können.

Ein arbeitswirtschaftlicher Vorteil besteht darin, dass die Ausbringung der erfindungsgemäßen Einstreu wesentlich leichter als die Ausbringung von herkömmlich verwendeten Strohhäckseln ist, da der Halter keine Maschine zur Zerkleinerung des Strohs vorhalten muss.

Bekanntermaßen verwendete Strohhäcksel sowie Hobel-/Sägespäne haben den wesentlichen Nachteil, dass sie nur ein geringes Saugvermögen aufweisen und schon nach kurzer Zeit wegen Verklebens ihrer Oberfläche nicht mehr weich und locker sind.

Hierzu liegt eine entsprechende vergleichende Prüfung der erfindungsgemäßen Einstreu mit den derzeit verwendeten Einstreuprodukten vor, welche in der nachfolgenden Tabelle wiedergegeben ist:

| | Erfindungsgemäße Einstreu | Gehäckseltes Stroh | Gehäckseltes Stroh (entstaubt) | Handelsübliche Hobel-/Sägespäne |
|---|---|---|---|---|
| Produktgewicht (Schüttgewicht HI in g) | 258 | 122 | 48 | 62 |
| Quellverhalten | 100% | 30% | 30% | 0% |
| Menge des zu prüfenden Produkts (in g) | 200 | 200 | 200 | 200 |
| Menge der zugefügten Flüssigkeit (in g) | 1000 | 1000 | 1000 | 1000 |
| Restflüssigkeit nach 5 Minuten (in g) | 252 | 382 | 489 | 493 |
| Prozentuale Aufnahme der Flüssigkeit | 374 | 309 | 255,5 | 253,5 |
| Restflüssigkeit nach 30 Minuten (in g) | 249 | 388 | 482 | 471 |
| Prozentuale Aufnahme der Flüssigkeit | 375,5 | 306 | 259 | 264,5 |

Folgende Punkte sind bei der Prüfung zu beachten:
1. Die Produktprobe ist auszuwiegen. Das Verhältnis von Produkt zu Flüssigkeit muss unbedingt über die gesamte Versuchsprobe gleich bleiben. Die Prüfgefäße sind gleicher Form und Abmessungen.
2. 200 g des zu prüfenden Produkts werden ausgewogen und in ein Prüfgefäß mit mindestens 2 Liter Fassungsvermögen gefüllt.
3. Das Produkt wird mit 1000 g Wasser gleichmäßig benetzt.
4. Das Produkt verweilt in einem 1. Versuch 5 Minuten in dem Prüfgefäß. Das überschüssige Wasser wird anschließend abgegossen und ausgewogen.
5. Das Produkt verweilt in einem 2. Versuch 30 Minuten in dem Prüfgefäß. Das überschüssige Wasser wird anschließend abgegossen und ausgewogen.

Eine Weiterbildung der Erfindung sieht vor, dass das Granulieren der Pellets und/oder Briketts mittels eines Trockengranulierers erfolgt, der nach Art eines Walzenstuhls mit zwei gegeneinander rotierenden Walzen arbeitet, wobei die Breite des zwischen den Walzen befindlichen Spalts derart eingestellt wird, dass ein Granulat mit vorgegebener Körnung erhalten wird.

Mit einem derartigen Trockengranulierer lässt sich auf einfache Weise eine an die Wachstumsstufen und Bedürfnisse des Geflügels angepasste Einstreu herstellen. Über die Walzenspaltbreite lässt sich hierbei die gewünschte Körnung bzw. Kornverteilung des Granulats einstellen.

Vorzugsweise werden Walzen mit einer Oberfläche verwendet, die glatt und/oder radial geriffelt ist.

Eine vorteilhafte Ausgestaltung der Erfindung sieht vor, dass das Zerkleinern des Strohs mittels eines Auflösers durch ein definiertes Lochsieb bis zu einem vorgegebenen Feinheitsgrad erfolgt.

Dadurch wird erreicht, dass das Stroh in nur einem Arbeitsgang besonders schonend bearbeitet und die Energiebilanz entsprechend verbessert wird.

Nach dem Stand der Technik sind hierzu zwei Arbeitsschritte erforderlich, wobei in einem ersten Schritt die Strohballen mittels eines Ballenauflösers grob zerkleinert und dann in einem zweiten Schritt in einer Hammermühle weiter zerkleinert werden.

Gemäß einer Weiterbildung der Erfindung erfolgt das Verdichten des zerkleinerten Strohs durch Pressen, derart, dass dabei Temperaturen zwischen 70 und 75 °C im Stroh erreicht werden.

Dadurch wird erreicht, dass die erfindungsgemäße Einstreu weniger mit potentiellen mikrobiellen Krankheitserregern belastet ist. Die hohen Temperaturen können eine Vielzahl von mikrobiellen Krankheitserregern abtöten.

Dadurch werden bereits bei der Einstallung des Geflügels Erkrankungen, die auf solche Krankheitserreger zurückzuführen sind, verhindert. Vorteilhaft wird dadurch auch der Medikamentenverbrauch reduziert. Weniger Medikamente bedeuten weniger Rückstände im Schlachtkörper des Geflügels.

Gesunde Tiere bedeuten für den Geflügelhalter wiederum bessere Masterfolge, da er dann die Besatzdichte in seinen Stallungen entsprechend der geplanten Haltungsrichtlinie der Europäischen Kommission von 30 auf 38 kg Lebendgewicht pro m² steigern darf.

Ein Untersuchungsbericht der Tierärztlichen Hochschule Hannover vom 9. Dezember 2004 bestätigt die Reduzierung der mikrobiellen Belastung in den erfindungsgemäß hergestellten Pellets gegenüber unbehandeltem Stroh. Der Befund ist in der nachfolgenden Tabelle wiedergegeben:

| Bezeichnung | Stroh | Strohpellets |
|---|---|---|
| Sinnenprüfung | dunkelgelbes Stroh, diffus vergraut, regelmäßig weinrot veränderte Bereiche, im Griff trocken, leicht stockiger Geruch, Lupenbetrachtung der Feinanteile: unauffällig | hellbraune Pellets mit einem Durchmesser von 8 mm, z. T. mit glatter, glänzender und z.T. mit rauher, stumpfer Oberfläche, einige Oberflächen wie bestäubt wirkend, im Griff trocken, leicht röstartiger Geruch, Lupenbetrachtung: unauffällig |
| Zearalenon, µg/kg: | | 45 |
| Vomitoxin, µg/kg: | | 1248 |
| Aerobe Bakterien, KBE/g | 5,5 x 10⁷ Leitkeime: Pantoea agglomerans, coryneforme Bakterien | < 10⁵ |
| Schimmelpilze, KBE/g: | 1,5 x 10³ nicht differenzierbar, 0,5 x 10³ Alternaria sp., < 10³ Aspergillus sp | nicht nachweisbar |
| Hefen, KBE/g: | nicht nachweisbar | nicht nachweisbar |

Der Befund ergibt, dass in den Pellets und mithin in der erfindungsgemäßen Einstreu weitestgehend keine Bakterien und Pilzsporen mehr nachweisbar sind. Somit stellt die erfindungsgemäße Einstreu ein hygienisches Produkt dar.

Weiterhin ist vorgesehen, dass die Granulate in einem engen Kornband, wobei der überwiegende Teil aller Fraktionen, vorzugsweise 90 %, vorzugsweise in einem Bereich von bis zu 3,5 mm liegen.

Dadurch wird erreicht, dass sich das Fraktionengemisch nicht einfach entmischen lässt.

Kornband bezeichnet hierbei die Häufigkeit von Körnern bestimmter Größe.

Vorzugsweise weist das Kornband vier Fraktionen auf, nämlich eine sehr grobe Fraktion, die nicht über 15 %, vorzugsweise nicht über 10 % (größer 2,8 mm Sieböffnungsweite) liegt, eine grobe Fraktion, die nicht über 35 %, vorzugsweise zwischen 15 und 35 % (zwischen 3,5 und 2,0 mm Sieböffnungsweite) liegt, eine mittlere Fraktion, die nicht über 50 %, vorzugsweise zwischen 25 und 40 % (zwischen 2,0 und 1,0 mm Sieböffnungsweite) liegt, und eine feine Fraktion, die nicht über 50 %, vorzugsweise zwischen 20 und 50 % (kleiner 1,0 mm Sieböffnungsweite) liegt.

Vorzugsweise beträgt die Schüttdichte der Einstreu 200 bis 500 kg/m³, vorzugsweise 250 und 320 kg/m³.

Dadurch ergibt sich insbesondere auch ein Vorteil hinsichtlich eines wirtschaftlichen Transports der Einstreu vom Hersteller zum Verwender, da gegenüber einer herkömmlichen Einstreu in Form von Strohhäkseln, Hobel- und Sägerspänen mehr Material transportiert werden kann.

Weiterhin ist vorgesehen, dass die Körnung bis 15 mm, vorzugsweise bis 8 mm, besonders bevorzugt bis 4 mm, beträgt.

In einer vorteilhaften Ausgestaltung der Erfindung wird die Einstreu nach der Granulierung nicht mehr entstaubt.

Es hat sich gezeigt, dass ein vorgegebener Staubanteil wünschenswert ist, um das Saugvermögen der Einstreu zu erhöhen.

Vorzugsweise enthält die Einstreu keine Zusatzstoffe.

Die Erfindung betrifft außerdem die Verwendung der erfindungsgemäßen Einstreu als Saugbinder für Flüssigkeiten, insbesondere für Öl, etc., als Dämmmaterial, als Füllstoff oder als Einstreu im Milchviehbereich.

Schließlich betrifft die Erfindung noch die Verwendung einer verbrauchten Einstreu nach einem der Ansprüche 1 bis 11 als Gärsubstrat in Biogasanlagen.

Herkömmliche Einstreu aus Hobel- oder Sägespänen führen durch den Ligningehalt zu großen Problemen in Biogasanlagen. Die erfindungsgemäße Einstreu besteht aus reinem Stroh und kann nach ihrem Gebrauch problemlos als Mist von den Bakterien umgesetzt werden. Dadurch wird eine höhere Akzeptanz bei der Hühnertrockenkotverwertung erreicht.

Nachfolgend wird die Erfindung anhand eines Ausführungsbeispiels erläutert, das in der Zeichnung dargestellt ist. In dieser zeigt:

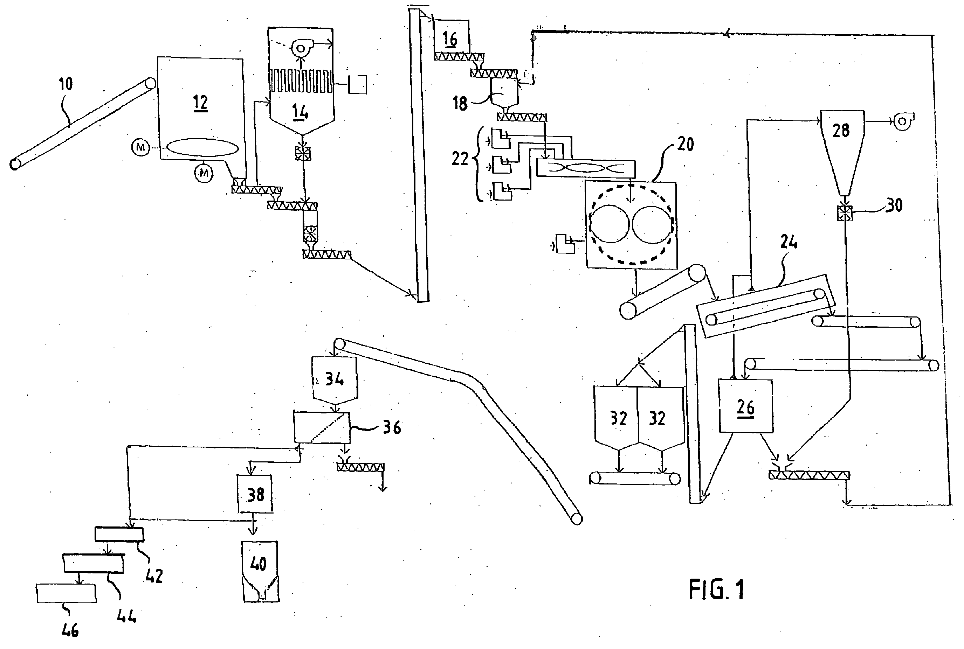

- Fig. 1: schematisch eine Anlage zur Herstellung der erfindungsgemäßen Einstreu.

Das für Herstellung der erfindungsgemäßen Einstreu benötigte Stroh wird vor seiner Bergung direkt auf dem Feld auf Aussehen und Geruch überprüft. Der Feuchtigkeitsgehalt wird mit einem elektrischen Widerstandsmesser ermittelt. Bei einem Feuchtigkeitsgehalt im Stroh von unter 15% wird es in Ballen gepresst und zu einer hier nicht dargestellten Einlagerung befördert. Vor der Einlagerung werden die Ballen stichprobenartig mit einem elektrischen Widerstandsmesser auf Restfeuchtigkeit überprüft. Ballen mit einer Feuchtigkeit über 15% werden nicht eingelagert. Die Ballen werden in Lagerhallen aufgestapelt.

Bei der Auslagerung wird das Stroh nochmals auf Geruch und Farbe überprüft.

Zur Herstellung der erfindungsgemäßen Einstreu wird der Ballen auf ein Zuführband 10 gelegt und in einen Auflöser 12 eingebracht, in dem der Ballen zerkleinert wird. Hierbei wird das Stroh durch ein definiertes Lochsieb vermahlen.

Im Ballen befindliche Fremdkörper werden bei diesem Vorgang bereits durch einen Magneten, eine Steinfalle und eine Staubabsaugung vom Stroh getrennt.

Der entstehende Staub wird während der Förderung laufend mittels einer Filteranlage 14 abgesaugt.

Das zerkleinerte Stroh wird in ein Silo 16 überführt und anschließend in einem Zwischenbehälter 18 gepuffert.

Das zerkleinerte Stroh wird anschließend in einer Presse 20 verdichtet, derart, dass hierbei Temperaturen von ca. 70 - 75 °C im Stroh entstehen.

Über ein Dosierungssystem 22 kann die gewünschte Dichte der Pellets bestimmt werden.

Ein Kühlband 24 transportiert daraufhin die noch warmen Pellets zu einer Reinigungsanlage 26, in der die Pellets abgesiebt werden. Während des Transports werden die Pellets gekühlt. Die Kühlluft wird hierbei in einen Zyklon 28 mit Schleuse 30 geleitet, in dem diese entstaubt wird.

Nach dem Sieben und Absaugen wird eine Probenahme zur Schüttdichtebestimmung entnommen. Dies ist eine Kontrolle des Pressvorganges.

Anschließend werden die Pellets in Silos 32 zwischengelagert.

Zur Weiterverarbeitung werden die Pellets aus den Silos 32 entnommen, in einen weiteren Vorratsbehälter 34 überführt und nochmals mit einem Rundsieb 36 von Bruch und Staub gesäubert.

In einer einstellbaren Granuliermaschine 38 werden die Pellets zu Granulat weiterverarbeitet und anschließend in BIG-BAG's 40 oder mittels eines Absackers 42 in Papiersäcke abgefüllt. Die Papiersäcke können mittels eines Palettierers 44 auf Paletten gestapelt und anschließen mittels eines Wicklers 46 mit Folie verpackt werden. Selbstverständlich kann die Einstreu auch als lose Ware verladen werden.

Bei der Abfüllung wird das Granulat hinsichtlich vorgegebener Parameter überprüft und kontrolliert.

## Patentansprüche

1. Einstreu für Geflügel, erhältlich durch ein Verfahren, bei dem Pellets und/oder Briketts aus zunächst zerkleinertem, dann verdichtetem Stroh, trocken granuliert werden, wobei das Granulat verdichtete Anteile aufweist.

2. Einstreu nach Anspruch 1, **dadurch gekennzeichnet, dass** das Granulieren der Pellets und/oder Briketts mittels eines Trockengranulierers (38) erfolgt, der nach Art eines Walzenstuhls mit zwei gegeneinander rotierenden Walzen arbeitet, wobei die Breite des zwischen den Walzen befindlichen Spalts derart eingestellt wird, dass ein Granulat mit vorgegebener Körnung erhalten wird.

3. Einstreu nach Anspruch 2, **dadurch gekennzeichnet, dass** Walzen mit einer Oberfläche verwendet werden, die glatt und/oder radial geriffelt sind.

4. Einstreu nach einem der Ansprüche 1 bis 3, **dadurch gekennzeichnet, dass** das Zerkleinern des Strohs mittels eines Auflösers (12) durch ein definiertes Lochsieb bis auf einen vorgegebenen Feinheitsgrad erfolgt.

5. Einstreu nach einem der Ansprüche 1 bis 4, **dadurch gekennzeichnet, dass** das Verdichten des zerkleinerten Strohs durch Pressen erfolgt, derart, dass dabei Temperaturen zwischen 70 und 75 °C im Stroh erreicht werden.

6. Einstreu nach einem der Ansprüche 1 bis 5, **dadurch gekennzeichnet, dass** die Granulate in einem engen Kornband liegen, wobei der überwiegende Teil aller Fraktionen, vorzugsweise 90 %, vorzugsweise in einem Bereich von bis zu 3,5 mm liegt.

7. Einstreu nach einem der Ansprüche 1 bis 6, **dadurch gekennzeichnet, dass** das Kornband vier Fraktionen aufweist, nämlich eine sehr grobe Fraktion, die nicht über 15 %, vorzugsweise nicht über 10 % (größer 2,8 mm Sieböffnungsweite) liegt, eine grobe Fraktion, die nicht über 35 %, vorzugsweise zwischen 15 und 35 % (zwischen 3,5 und 2,0 mm Sieböffnungsweite) liegt, eine mittlere Fraktion, die nicht über 50 %, vorzugsweise zwischen 25 und 40 % (zwischen 2,0 und 1,0 mm Sieböffnungsweite) liegt, und eine feine Fraktion, die nicht über 50 %, vorzugsweise zwischen 20 und 50 % (kleiner 1,0 mm Sieböffnungsweite) liegt.

8. Einstreu nach einem der Ansprüche 1 bis 7, **dadurch gekennzeichnet, dass** die Schüttdichte 200 bis 500 kg/m³, vorzugsweise 250 bis 320 kg/m³, beträgt.

9. Einstreu nach einem der Ansprüche 1 bis 8, **dadurch gekennzeichnet, dass** die Körnung bis 15 mm, vorzugsweise bis 8 mm, besonders bevorzugt bis 4 mm, beträgt.

10. Einstreu nach einem der Ansprüche 1 bis 9, **dadurch gekennzeichnet, dass** die Einstreu nach der Granulierung nicht mehr entstaubt wird.

11. Einstreu nach einem der Ansprüche 1 bis 10, **dadurch gekennzeichnet, dass** die Einstreu keine Zusatzstoffe enthält.

12. Verwendung der Einstreu nach einem der Ansprüche 1 bis 11 als Saugbinder für Flüssigkeiten, insbesondere für Öl etc., als Dämmmaterial, als Füllstoff oder als Einstreu im Milchviehbereich.

13. Verwendung einer verbrauchten Einstreu nach einem der Ansprüche 1 bis 11 als Gärsubstrat in Biogasanlagen.
